# EUROPÄISCHE PATENTANMELDUNG

(11) **EP 4 280 139 A1**
(43) Veröffentlichungstag der Anmeldung: **22.11.2023**
(21) Anmeldenummer: 23174511.8
(22) Anmeldetag: 22.05.2023
(51) Int. Cl.: G06Q 10/107, H04L 51/21, H04L 51/42

(54) **KOMMUNIKATIONSSYSTEM, VERFAHREN UND COMPUTERPROGRAMMPRODUKT ZUR BEREITSTELLUNG VON DOKUMENTEN VON EINEM ODER MEHREREN ABSENDERN AN MINDESTENS EINEN EMPFÄNGER**

(30) Priorität: 21.05.2022 DE 102022112839
(71) Anmelder: Set GmbH, 30163 Hannover (DE)
(72) Erfinder: Baum, Tobias, 30163 Hannover (DE)
(74) Vertreter: Horak, Michael

(57) **Zusammenfassung**

Die vorliegende Erfindung betrifft ein Kommunikationssystem, ein Verfahren und ein Computerprogrammprodukt zur Bereitstellung von Dokumenten von einem oder mehreren Absendern an mindestens einen Empfänger, wobei das Kommunikationssystem mindestens eine Teileinheit auf der Seite des mindestens einen Absenders und eine Empfangskomponente auf Seiten des Empfängers aufweist, wobei die Empfangskomponente für jede Teileinheit mindestens eines Absenders jeweils eine Teilkomponente auf Seiten des Empfängers umfasst.

## Beschreibung

### Kurzdarstellung der Erfindung

Die vorliegende Erfindung betrifft ein Kommunikationssystem, ein Verfahren und ein Computerprogrammprodukt zur Bereitstellung von Dokumenten von einem oder mehreren Absendern an mindestens einen Empfänger, wobei das Kommunikationssystem mindestens eine Teileinheit auf der Seite des einen Absenders und eine Empfangskomponente auf Seiten des Empfängers aufweist, wobei die Empfangskomponente für jede Teileinheit mindestens eines Absenders jeweils eine Teilkomponente auf Seiten des Empfängers umfasst.

Dokumente, wie beispielsweise Kontoauszüge, Verträge, Rechnungen und andere, werden heutzutage häufig noch papierhaft an ihre Empfänger zugestellt. Dieser physische Versand wird jedoch zunehmend durch die elektronische Zustellung der Dokumente oder die Bereitstellung dieser abgelöst.

Die elektronische Zustellung der Dokumente oder Bereitstellung dieser erfolgt derzeit in der Regel über die folgenden Mechanismen oder Kombinationen hiervon. Eine Möglichkeit der Übermittlung von Dokumenten umfasst den elektronischen Mailverkehr, kurz E-Mail (engl. electronic mail), oder vergleichbare Systeme, bei denen Nachrichten und/oder Dokumente mithilfe des Internets über eine dedizierte Software beim Absender sowie beim Empfänger übertragen werden. Eine weitere Möglichkeit ist die Bereitstellung von Portalen oder Postboxen eines versendenden Unternehmens. Beispiele hierfür sind Online-Banking-Portale oder Versicherungsportale, die dem Kunden erlauben Nachrichten oder Dokumente abzurufen, die durch das jeweilige Unternehmen zur Verfügung gestellt wurden. Oftmals werden diese Kundenportale durch individuelle Zugangsdaten für jeden Kunden freigegeben. Alternativ zu der unternehmensspezifischen Zurverfügungstellung ist auch eine Bereitstellung von Nachrichten und Dokumenten mithilfe eines oder mehrerer dritter Unternehmen möglich. Bei einer solchen zentral betriebenen Postbox, wie beispielsweise der "Digitalen Kopie" der Deutschen Post AG (https:llwww.deutschepost.deldeldldigitale-kopie.html) oder dem "bitkasten" der Bitkasten AG (https://www.bitkasten.de/), werden Nachrichten und/oder Dokumente durch den Absender auf den Plattformen der Drittanbieter, zum Teil verschlüsselt, hinterlegt und können durch den Empfänger aufgerufen werden. Neben der rein elektronischen Übermittlung ist in einigen Fällen zusätzlich oder alternativ die Versendung in postalischer Form möglich. Diese Möglichkeiten der elektronischen Zustellung von Nachrichten oder Dokumenten werden derzeit in verschiedenen Variationen und Lösungen angewendet, wie beispielsweise bei öffentlichen Ämtern, beispielsweise als Servicekonten, Postkörbe, EGVP-Postfächer und anderen, die strukturell den o.g. Möglichkeiten zugeordnet werden können bzw. Mischformen dieser sind.

Darüber hinaus wird in der WO 2012/094563 A1 beispielsweise ein Computersystem zum Verarbeiten von Benutzerdaten in Bezug auf die Identitätsauthentifizierung über ein elektronisches Kommunikationsnetz für einen Benutzer eines digitalen Mailbox-Systems beschrieben. Hierbei wird von dem System ein Name und die aktuelle Adresse vom Benutzer unter Verwendung eines Kommunikationsnetzes erhalten und bestimmt, ob es sich bei dieser Adresse um eine gültige Adresse handelt. Im Folgenden werden bei einer gültigen Adresse die Daten auf eine bestehende digitale Mailbox-System-Zuordnung geprüft und, falls dies der Fall ist, freigegeben.

Die WO 2008/154049A2 beschreibt eine kryptografische Steuerung des Zugriffs auf Dokumente, wobei die Dokumente teilweise verschlüsselt werden, um sie vor unbefugtem Zugriff zu schützen. Beim Zugriff auf das verschlüsselte Dokument wird zunächst das Dokument erhalten, welches eine Kennung aufweist, die dem Dokument zugeordnete Sicherheitsdaten aufweist. Die Sicherheitsdaten enthalten einen verschlüsselten Teil, der die Autorisierungen enthält. Nur mithilfe des geeigneten Schlüssels kann sodann eine Autorisierung in den Sicherheitsdaten erfolgen, die das verschlüsselte Dokument sodann entschlüsselt, damit der Benutzer auf das Dokument zugreifen kann.

Ferner beschreibt die DE 10 2020 103 559 A1 ein Kommunikationsverfahren zur sicheren Übermittlung elektronischer Informationen von einem Sender an einen Empfänger über einen Server, wobei Informationen vom Absender in einem Server empfangen und abgespeichert werden. Im Folgenden wird ein Kopfzeilen-Datum aus den elektronischen Informationen extrahiert und das Kontaktdatum des Empfängers identifiziert. Nach den zuvor genannten Schritten wird ein Verknüpfungsdokument erstellt, das ein Herunterladen der für ihn bestimmten elektronischen Informationen ermöglicht. Weiterhin wird eine Nachricht erzeugt, die das extrahierte Kopfzeilen-Datum und das Verknüpfungsdokument umfasst, welche im Anschluss an den Empfänger übermittelt wird.

Ein Nachteil im Stand der Technik ist, dass bei einigen der bekannten Systeme nicht sichergestellt werden kann, dass die Nachrichten und/oder Dokumente vom Absender stammen (Authentizität), diese nicht von Dritten mitgelesen werden können (Datenschutz) und/oder dass diese nicht durch Dritte verändert wurden (Integrität), ohne dass komplexe Systeme, die für den Absender und/oder Empfänger mit relativ viel Aufwand verbunden sind, wie beispielsweise das Arbeiten mit unterschiedlichen Softwareprodukten, Apps oder Anbietern, variierende Zugangsdaten, aufwändige Einrichtung und anderes, eingesetzt werden. Insbesondere unverschlüsselte E-Mails sind grundsätzlich nicht sicher, da diese auch durch Dritte lesbar sein können. Verschlüsselte E-Mails hingegen sind aufwändig einzurichten und zu benutzen. Darüber hinaus ist bei beiden Varianten die E-Mail-Adresse bzw. die elektronische Identität des Empfängers dem potenziellen Versender zum Teil nicht bekannt.

Bei den üblichen klassischen E-Mails haben Betreiber potentiell Zugriff auf alle Dokumente, Dokumentendaten und/oder Dokumentenmetadaten eines Empfängers, gleiches gilt auch für klassische auf Endcomputem installierte E-Mail-Clients, wie beispielsweise Outlook oder Thunderbird. Ferner ist die Installation einer speziellen Client-Software notwendig.

Wie zuvor bereits erwähnt, ist der Nachteil bei unternehmensspezifischen Postboxen der, dass der Empfänger für jeden Zugang der verschiedenen Postboxen der Anbieter unterschiedliche Zugangsdaten benötigt, was die Verwendung dieser kompliziert und undurchsichtig macht. Darüber hinaus ist ein zentraler Überblick über die diversen Postboxen hinweg mit erheblichem Aufwand verbunden und wird schnell unübersichtlich.

Zentrale Postboxen von einem Drittanbieter haben den Nachteil, dass Dokumente vom Absender an den Betreiber der zentralen Postbox übermittelt und dort gespeichert werden. Folglich können dadurch Probleme mit dem Datenschutz und Datensicherheit auftreten. Darüber hinaus muss es sich bei dem Anbieter der zentralen Postboxen um einen vertrauenswürdigen Partner handeln, da der Kontaktpunkt zwischen dem Absender und dem Empfänger nicht unter Kontrolle des Absenders steht. Es besteht daher eine hohe Abhängigkeit zum Anbieter der zentralen Postbox. Der Ausfall der zentralen Postbox würde zum gesamten Ausfall der Kommunikationsmöglichkeit zwischen Absendern und Empfängern führen ("Single Point of Failure").

Die Aufgabe der vorliegenden Erfindung ist daher ein System zu Verfügung zu stellen, das die oben genannten Probleme überwindet. Insbesondere sollen die Dokumente und/oder Nachrichten im Hinblick auf die Datensicherheit (Datenschutz, Integrität) solange wie möglich auf den Systemen des Absenders verbleiben. Darüber hinaus soll die Authentizität gewahrt werden, indem die Informationen an einen spezifischen Empfänger von einem spezifischen Absender übermittelt werden. Ferner soll mithilfe der vorliegenden Erfindung ein einfaches System geschaffen werden, das es jedem Absender und Empfänger ermöglicht sicher Nachrichten zu versenden bzw. zu empfangen, ohne komplizierte Einrichtungen von Kundenportalen, Software, Anwendungen, wie Apps, oder Ähnlichen. Das System sollte weiterhin derart gestaltet sein, dass der Ausfall einzelner Komponenten oder Bestandteile des Systems nicht zu einem Gesamtausfall des kompletten Systems führt, wie beispielsweise bei den zentralen Postboxen. Anders als bei klassischen Emails bzw. E-Mail-Clients soll ferner keine Einsicht von Dokumenten, Dokumentendaten und/oder Dokumentenmetadaten eines Empfängers durch den Bereitsteller oder Betreiber, sofern dieser nicht gleichzeitig der Absender des jeweiligen Dokuments ist, möglich sein.

Die Aufgabe der vorliegenden Erfindung wird daher durch das folgende System gelöst, das Teil-Postboxen mehrerer Absender, in der Regel Organisationen oder Unternehmen, zu einem browserbasierten föderierten Informationssystem integriert, bei dem der Empfänger über einen Zugriffspunkt auf verschiedene Dokumente verschiedener Absender zugreifen kann.

Die vorliegende Erfindung betrifft ein Kommunikationssystem zur Bereitstellung von Dokumenten von einem oder mehreren Absendern an mindestens einen Empfänger, wobei das Kommunikationssystem mindestens eine Teileinheit auf der Seite des mindestens einen Absenders und eine Empfangskomponente auf Seiten des Empfängers aufweist, wobei die Empfangskomponente für jede Teileinheit mindestens eines Absenders jeweils eine Teilkomponente auf Seiten des Empfängers aufweist und wobei a) die mindestens eine Teileinheit des Absenders eine Teil-Postbox darstellt, die als Server-Anwendung auf einem oder mehreren Rechensystemen betrieben wird; und b) die mindestens eine Teilkomponente des Empfängers einen Teil-Postbox-Proxy umfasst, welcher mithilfe eines Webbrowsers auf mindestens einem Endgerät eines Empfängers ausgeführt wird, wobei ferner die mindestens eine Teilkomponente des Empfängers Teil einer Zusammenfassungskomponente ist, die dem Empfänger eine Übersicht aller von ihm eingebundenen Teil-Postboxen mindestens eines Absenders ermöglicht. Die Empfangskomponenten untereinander und die Empfangskomponenten zur Zusammenfassungskomponente sind ferner im Informationsaustausch mindestens in Bezug auf Dokumente, Dokumentendaten und/oder Dokumentmetadaten isoliert.

Darüber hinaus betrifft die vorliegende Erfindung auch ein Verfahren zur Bereitstellung von Dokumenten von einem oder mehreren Absendern an mindestens einen Empfänger, vorzugsweise mit einem zuvor beschriebenen Kommunikationssystem, umfassend die Schritte:
a) Bereitstellen mindestens eines Dokuments innerhalb einer Teileinheit, vorzugsweise einer Teil-Postbox, eines Absenders;
b) Übermittlung des mindestens einen Dokuments aus der Teil-Postbox an den mindestens einen Empfänger oder Abrufen des mindestens einen Dokuments aus der Teil-Postbox durch den mindestens einen Empfänger, wobei der Empfang des Dokuments über ein Gegenstück zu der Teil-Postbox des Absenders, nämlich der Teilkomponente, vorzugsweise der Teil-Postbox-Proxy, der jeweiligen Empfänger erfolgt;
c) Darstellen der Dokumente für den Empfänger; und
d) Auslesen, Sichten und/oder Weiterverarbeiten des mindestens einen Dokuments durch den mindestens einen Empfänger,
wobei der Informationsaustausch zu Dokumenten, Dokumentendaten und/oder Dokumentenmetadaten beim Absender und Empfänger derart isoliert ist, dass kein Absender Kenntnis von Dokumenten, Dokumentendaten und/oder Dokumentenmetadaten anderer Absender erhält.

Das Verfahren umfasst in einem Aspekt jedoch auch die Kommunikation von mehreren Absendern mit einem oder mehreren Empfängern, wobei die Dokumente der jeweiligen Absender vorzugsweise in jeweils separaten Teil-Postboxen erstellt und gespeichert werden und von diesen sodann an einen Empfänger übermittelt werden, wobei die Dokumente der jeweiligen Absender aus den Teil-Postboxen in getrennten Teil-Postbox-Proxys des Empfängers empfangen werden und vorzugsweise durch eine Zusammenfassungskomponente gemeinsam angezeigt werden und/oder zugreifbar sind. In einer weiteren Ausführungsform der vorliegenden Erfindung umfasst das Verfahren auch die Bereitstellung ein oder mehrerer Dokumente aus ein oder mehreren Teil-Postbox-Servern einer Teil-Postbox eines Absenders, wobei die unterschiedlichen Teil-Postbox-Server mit demselben Teil-Postbox-Proxy kommunizieren, der mit der Teil-Postbox des Absenders zusammenhängt.

Ferner betrifft die vorliegende Erfindung auch ein Computerprogrammprodukt, das in den internen Speicher eines digitalen Computers geladen werden kann und Softwarecodeabschnitte umfasst mit denen mindestens ein Schritt des obenstehenden Verfahrens ausgeführt werden kann, wenn das Computerprogrammprodukt auf einem Computer läuft.

Die Aufgabe wird insbesondere durch das Kommunikationssystem mit den Merkmalen des Patentanspruchs 1, durch das Verfahren mit den Merkmalen des Patentanspruchs 4 sowie Computerprogrammprodukt mit den Merkmalen des Anspruchs 10 gelöst. Vorteilhafte Ausgestaltungen mit zweckmäßigen Weiterbildungen der Erfindung sind in den übrigen Ansprüchen angegeben.

### Beschreibung der Zeichnungen

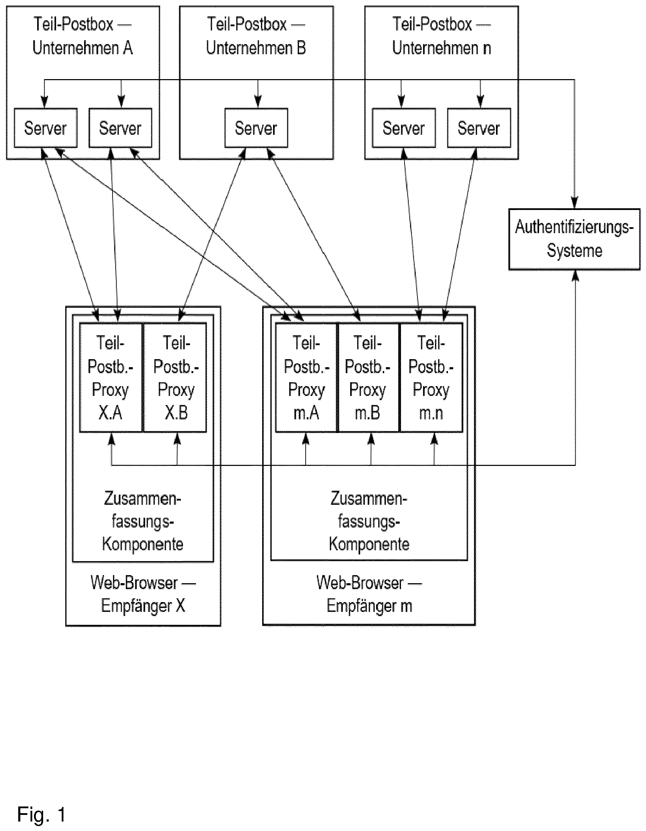

- Fig. 1: Schematische Darstellung einer bevorzugten Interaktion der Komponenten.

### Detaillierte Beschreibung der Erfindung

Die vorliegende Erfindung betrifft ein Kommunikationssystem, ein Verfahren und ein Computerprogrammprodukt zur Bereitstellung von Dokumenten von einem oder mehreren Absendern an mindestens einen Empfänger, wobei das Kommunikationssystem mindestens eine Teileinheit auf der Seite des einen Absenders und eine Empfangskomponente auf Seiten des Empfängers aufweist, wobei die Empfangskomponente für jede Teileinheit eines Absenders jeweils eine Teilkomponente auf Seiten des Empfängers umfasst.

Im Folgenden sollten die Artikel "ein" und alle Ableitungen hiervon, wie sie hier verwendet werden, generell als "ein/e/es oder mehrere" verstanden werden, sofern nicht anderweitig angegeben oder aus dem Kontext als Singularform ersichtlich ist.

Sofern die Begriffe "enthält", "hat", "besitzt" und dergleichen in der Beschreibung oder den Ansprüchen verwendet werden, sollen diese Begriffe derart verstanden werden, wie der Begriff "aufweisend" oder "umfassend", d.h. nicht abschließend, außer es ist explizit angegeben.

Im Folgenden wird der Begriff "Dokument" für alle Arten von Informationen und/oder Nachrichten verwendet, die zwischen zwei Personen übermittelt werden können. Insbesondere bezieht sich der Begriff auf digitalisierte, d.h. in elektronischer Form vorliegende Dokumente. Diese umfassen, sind jedoch nicht beschränkt auf die folgende Auflistung: Text-, Bild- und/oder Audioinformationen, digitalisierte Schriftstücke, Urkunden und/oder amtliche Dokumente, Belege, Verbunddokumente, Zeugnisse, Atteste und ähnliche. Insbesondere umfasst der Begriff mindestens eine von einem Absender für einen Empfänger aufbereitete Informationseinheit, vorzugsweise im PDF- oder HTML-Format, inklusive optional dazugehöriger Dateianhänge. Darüber hinaus umfasst der Begriff "Dokument" auch Dokumentendaten und/oder Dokumentenmetadaten. Der Einfachheit halber wird bei den Informationen und Nachrichten jedoch im Folgenden von Dokumenten gesprochen.

Unter dem Begriff "computergestützt" wird im Zusammenhang mit der vorliegenden Beschreibung der Erfindung die Implementierung eines Verfahrens verstanden, bei der vorzugsweise ein Prozessor mindestens einen Verfahrensschritt eines Verfahrens ausführt. Der Begriff "computergestützt" umfasst neben Computern auch andere elektronischen Geräte mit Datenverarbeitungseigenschaften, die Daten bearbeiten und/oder verarbeiten können.

"Absender" ist in der vorliegenden Erfindung eine Organisation, Person, ein Unternehmen oder Einrichtung, auch Sender genannt, die ein Dokument an eine andere Person, den Empfänger oder Adressaten, bereitstellt und an diesen übermittelt. Wie auch bei dem Absender kann es sich bei dem Empfänger um eine oder mehrere Personen und/oder Organisationen handeln, für die Dokumente von einem oder mehreren Absendern bereitgestellt werden.

Das Kommunikationssystem der vorliegenden Erfindung umfasst mindestens eine Teileinheit, nämlich eine Teil-Postbox, auf der Seite des Absenders und mindestens eine Teilkomponente, vorzugsweise Empfangskomponente, auf der Seite des mindestens einen Empfängers.

Die mindestens eine Teileinheit des Absenders, bei welcher es sich um eine Teil-Postbox handelt, wird als Server-Anwendung jeweils auf ein oder mehreren Rechensystemen betrieben. Bei den Rechensystemen handelt es sich vorzugsweise um mindestens einen Hostrechner, auf dem mindestens eine Server-Anwendung bereitgestellt wird. Jedoch kann es sich auch um mehrere Hostrechner handeln, auf welchen Teile einer Server-Anwendung oder mehrere unterschiedliche Server-Anwendungen ausgeführt werden. In einer weiteren Ausführungsform kann es sich bei dem mindestens einen Rechensystem jedoch auch um einen virtuellen Host handeln. Die Server-Anwendung für die Teil-Postboxen als auch die Rechensysteme selbst, werden in der Regel durch den jeweiligen Absender betrieben, jedoch ist auch ein Betrieb der Server-Anwendungen und/oder der Hostrechner durch Dritte möglich. Nachteilig bei dem Betrieb durch Dritte ist jedoch, dass der Datenschutz und/oder Integrität der Nachrichten nicht gegeben sein könnten. Bei der Teil-Postbox handelt es sich folglich vorzugsweise um mindestens ein Rechensystem oder eine zusammengehörige Menge von Rechensystemen, auf welchen Dokumente und/oder für die Zurverfügungstellung der Dokumente benötigte Informationen bereitgestellt werden. Üblicherweise betreibt ein Absender eine Teil-Postbox, es ist jedoch auch möglich, dass eine Teil-Postbox Dokumente mehrerer Absender bereitstellt oder dass ein Absender mehrere Teil-Postboxen betreibt.

Die mindestens eine Empfangskomponente wird hingegen mithilfe eines Webbrowsers auf einem Endgerät eines Empfängers ausgeführt. Bei dem Webbrowser kann es sich um jedes Computerprogramm handeln, das eine Benutzeroberfläche für Webanwendungen zur Verfügung stellt, mit welcher Webseiten, Medien und/oder auch Dokumente angezeigt werden können. Üblicherweise handelt es sich um eine auf dem jeweiligen Endgerät vorinstallierte Zugangssoftware zu Web-Inhalten. Bei dem Endgerät, d.h. dem Gerät mit dem ein Empfänger auf die Teilkomponente, die mit der einen ersten Teileinheit des Absenders zusammenwirkt und die Empfangskomponente umfasst, zugreift, kann es sich um einen Computer und/oder mobile Geräte handeln, wie Laptops, Tablets, Smartphones, Personal Computer (PCs) und andere elektronische Geräte, die zur Datenverarbeitung und zum Informationsaustausch geeignet sind und vorzugsweise eine Internetverbindung aufbauen können. Die Internetverbindung kann kabelgebunden und/oder kabellos erfolgen. Bei den kabellosen Verbindungen kann es sich beispielsweise um drahtlose lokale Netzwerke, wie beispielsweise (WLAN - Wireless Local Area Network), zellulare Netzwerke, Bluetooth-Verbindungen, Niedrigenergie-Weitverkehrsnetzwerke (LPWAN- Low-Power Wide Area Network), Satellitenkommunikationsverbindungen und/oder andere Kommunikationsverbindungen, wie Funkverbindungen, handeln. Bei der Empfangskomponente handelt es sich insbesondere um den komplementären Teil zu den Teil-Postboxen der Absender.

Die Empfangskomponente eines Empfängers umfasst mindestens einen Teil-Postbox-Proxy. Der mindestens eine Teil-Postbox-Proxy des einen Empfängers bildet hierbei ein konzeptionelles Gegenstück im Web-Browser zu der einen Teil-Postbox des Absenders, wobei Letztere mindestens einen Teil-Postbox-Server umfasst. Bei dem Teil-Postbox-Proxy handelt es sich insbesondere um einen Übertragungspunkt, in dem Dokumente und Informationen zur Zurverfügungstellung der Dokumente eines Absenders zusammenlaufen und an den Empfänger weitergegeben werden. Die Weitergabe der Dokumente bzw. des Dokuments kann aktiv durch den Absender erfolgen, wobei dieser die Dokumente an den Teil-Postbox-Proxy des Empfängers übermittelt. In einer bevorzugten Ausführung wird jedoch das mindestens eine Dokument durch den Empfänger abgerufen, d.h. der Empfänger kann kontrolliert auf die für ihn hinterlegten Dokumente auf der Teil-Postbox bzw. die Teil-Postbox-Server des Absenders zugreifen ("on demand"). So wird eine erhöhte Datensicherheit (Datenschutz und Integrität) gewährleistet.

In einem weiteren bevorzugten Aspekt der Erfindung bildet jeweils ein Teil-Postbox-Proxy auf Seiten des einen Empfängers im Web-Browser jeweils ein Gegenstück zu einer Teil-Postbox auf dem Rechensystem eines Absenders, wie beispielsweise der Fig. 1 zu entnehmen ist. Folglich kann einer Teil-Postbox beim Absender ein Teil-Postbox-Proxy beim Empfänger zugeordnet werden. Soll die Übermittlung des mindestens einen Dokuments an mehrere Empfänger gerichtet sein, so weist jeder der Empfänger (Empfänger X, m) eine eigene Empfangskomponente auf, die einen eigenen Teil-Postbox-Proxy aufweist, der mit der Teil-Postbox des Absenders verknüpft ist. In einer bevorzugten Ausführung der vorliegenden Erfindung umfasst die mindestens eine Empfangskomponente des mindestens einen Empfängers ferner eine Zusammenfassungskomponente, die dem Empfänger eine Übersicht aller von ihm eingebundenen Teil-Postboxen ermöglicht, wie der Fig. 1 zu entnehmen ist. Wie auch die Teil-Postbox-Proxys wird die Zusammenfassungs-Komponente im Web-Browser auf einem Endgerät des einen Empfängers ausgeführt.

In der Zusammenfassungskomponente des einen Empfängers werden die Dokumente aus dem aktiven Teil-Postbox-Proxy im Detail dargestellt. Als aktiver Teil-Postbox-Proxy wird insbesondere der Teil-Postbox-Proxy bezeichnet, aus dem der Empfänger ein Dokument anzeigen lässt. Die Kriterien für die Ausweisung als aktiver Teil-Postbox-Proxy können jedoch auch andere sein und vom Benutzer, d.h. dem Empfänger, variabel eingestellt werden. Ist ein Teil-Postbox-Proxy als aktiv gekennzeichnet, so werden die Dokumente aus diesem im Detail angezeigt, d.h. ihre Eigenschaften. Die anderen nicht-aktiven Teil-Postbox-Proxys hingegen weisen nur eine Übersicht über die enthaltenen Dokumente auf, beispielsweise deren Anzahl. Vorzugsweise bieten die nicht-aktiven Teil-Postbox-Proxys jedoch die Möglichkeit diese in den aktiven Status zu setzen und die innerhalb dieser erhaltenen Dokumente im Detail anzeigen zu lassen. In einem bevorzugten Aspekt der vorliegenden Erfindung übernimmt der aktive Teil-Postbox-Proxy auch die Aufgabe der Zusammenfassungskomponente, d.h. die Anzeige einer Übersicht der nicht-aktiven Teil-Postbox-Proxys.

Die Übertragung bzw. das Abrufen der Dokumente der mindestens einen Teil-Postbox zu dem mindestens einen komplementären Teil-Postbox-Proxy in der Empfangskomponente des Empfängers erfolgt über Kommunikationskomponenten, die eine Dokumentenübertragung vorzugsweise zwischen zwei Geräten an mindestens zwei verschiedenen Orten herstellen können. Die Kommunikation kann hierbei kabelgebunden und/oder kabellos erfolgen. Diese Verbindungen umfassen die zuvor zum Informationsaustausch beschriebenen Verbindungen. Die Übertragung bzw. das Abrufen von Dokumenten sowie die Kommunikation zwischen der mindestens einen Teil-Postbox und des mindestens einen Teil-Postbox-Proxys wird in einem Aspekt der Erfindung durch geeignete Maßnahmen gegen Ausspähen und Verfälschen der Informationen gesichert. Diese Maßnahmen umfassen mindestens eine Sicherheitskomponente, die eine Verschlüsselung der Kommunikation, beispielsweise mittels TLS (Transport Layer Security) bzw. SSL (Secure Sockets Layer) und/oder andere Verschlüsselungsprotokolle, umfassen kann. Die Verschlüsselungsprotokolle sollen hierbei insbesondere die Vertraulichkeit und Integrität der übertragenen Nachrichten sicherstellen. Darüber hinaus werden vorzugsweise weitere erweiterte Sicherheitsmaßnahmen mithilfe der Sicherheitskomponente durchgeführt, die vorzugsweise eine Cross-Site-Isolation umfassen, wie beispielsweise der https://developer.mozilla.org/en-US/docs/Web/Security/Same-origin_policy zu entnehmen ist. Bei der Cross-Site-Isolation ist zwischen je einem Inlineframe bzw. iframe per Teil-Postbox-Proxy durch die sogenannte "Gleiche-Herkunft-Richtlinie" (Same-Origin-Policy) sichergestellt, dass nur die notwendigen Informationen zwischen den Teil-Postbox-Proxys ausgetauscht werden können und insbesondere keine Dokumentendaten durch die Betreiber anderer Teil-Postboxen abrufbar sind. Für eine reine Anzeige der Dokumenten-Übersicht ist dabei vorzugsweise keinerlei Informationsaustausch zwischen der Zusammenfassungskomponente und den nicht aktiven Teil-Postbox-Proxys, abgesehen von der beim Einbetten verwendeten URL, nötig.

Zwischen den Teil-Postbox-Proxys bzw. der Zusammenfassungskomponente und den nicht aktiven Teil-Postbox-Proxys findet in der hiesigen Erfindung kein Informationsaustausch von Dokumenten, Dokumentendaten und/oder Dokumentenmetadaten statt. Das heißt, dass die Empfangskomponenten untereinander abgeschottet sind, wodurch die Absender keine Kenntnis der Dokumente anderer Absender haben. Grund dafür ist, dass die Empfangskomponente jeweils vom zugehörigen Absender bezogen wird. Darüber hinaus kann es durch die iframe-Abschottung im Browser auch nicht zu einem Informationsaustausch kommen. Folglich hat der Absender keine Kenntnis von den Dokumentendaten anderer Absender, gleiches gilt für die Zusammenfassungskomponente. Die Zusammenfassungskomponente ist von den Empfangskomponenten insofern isoliert, dass diese keine Kenntnis der Dokumente und/oder Dokumentenmetadaten in den Empfangskomponenten erlangen kann. Dadurch, dass die Empfangskomponente vom Absender bezogen wird, kann auch der Hersteller der Erfindung keine Kenntnis der Dokumentendaten erlangen bzw. entsprechende Versuche zum Umgehen der Isolation wären durch den Absender als Betreiber des Systems aufdeckbar.

Im Stand der Technik, wie klassischen Webmail-Systemen oder Email-Clients, ist eine solche Isolierung der Dokumentendaten nicht gegeben und eine Partei, von der die Empfangs- oder Zusammenfassungskomponente bezogen wird, wie beispielsweise Google oder Thunderbird, kann Kenntnis aller Dokumentendaten erlangen.

Ein weiterer Vorteil des hiesigen Kommunikationssystems ist, im Gegensatz zu den klassischen Systemen, der Browser-Betrieb, wodurch die Installation einer speziellen Client-Software nicht notwendig ist.

Das Kommunikationssystem umfasst in einer weiteren Ausführungsform der Erfindung eine Zugangskomponente, die einen Zugang mittels Identifizierung des jeweiligen Empfängers ermöglicht, wobei vorzugsweise für jeden Teil-Postbox-Proxy eine Identifizierung des jeweiligen Empfängers notwendig ist. Zur Identifizierung können grundsätzlich alle bekannten Authentifizierungssysteme verwendet werden, die es erlauben den Empfänger zu verifizieren. Diese umfassen, sind jedoch nicht begrenzt auf, OpenID^{®}, Mozilla Persona^{®}, OAuth^{®}, DataPortability^{®}, Liberty Alliance Project^{®}, Microsoft Passport^{®} und ähnliche. Besonders bevorzugt werden Authentifizierungssysteme verwendet, die dem Empfänger eine einmalige Authentifizierung ermöglichen, die ihn lokal berechtigt, auf ein oder mehrere Teil-Postbox-Proxys zuzugreifen, ohne dass dieser sich mehrfach anmelden muss. Diese Einmalanmeldung oder auch "Single Sign-on" (SSO) hat den Vorteil, dass der Empfänger mit nur einer Passworteingabe oder mit einigen bekannten Systemen sogar komplett ohne Passwort, wie beispielsweise FIDO^{®} (https:llfidoalliance.org/), auf alle seine Teil-Postbox-Proxys zugreifen kann bzw. diese in der Zusammenfassungskomponente anzeigen kann. Darüber hinaus wird durch die Eingabe des Passworts an nur einer Stelle das Phishing erschwert. Das mindestens eine Authentifizierungssystem der Zugangskomponente kann durch den mindestens einen Absender und/oder einen Drittanbieter betrieben werden. Im Folgenden soll die Zugangskomponente in Bezug auf den Authentifizierungsdienst der OpenID^{®} (https://openid.net/) beschrieben werden. Bei der Umsetzung des Authentifizierungsdienstes der Zugangskomponente mittels OpenID^{®} erfolgt die Zugangsberechtigung bzw. der Login des Empfängers vorzugsweise durch Öffnen eines Popup-Browserfensters, in welches die Zugangsdaten des jeweiligen OpenID^{®}-Providers bzw. Anbieters eingegeben werden können. Nach der Anmeldung durch Eingabe der Zugangsdaten wird in einem bevorzugten Aspekt ein Sitzungsschlüssel vergeben und mittels einer geschützten Textinformation in Form eines gesicherten Cookies übertragen, sodass der Benutzer für einen gewissen Zeitraum seine Anmeldedaten nicht erneut eingeben muss.

In einem weiteren Aspekt umfasst das System mindestens eine Identifikationskomponente durch welche die Identität des Empfängers eines Dokuments mit der vom Absender hinterlegten Identität des Empfängers abgeglichen, zugeordnet und/oder überprüft wird. Bei den vom Absender hinterlegten Identitäten des Empfängers kann es sich hierbei beispielsweise um persönliche Informationen, wie das Geburtsdatum, Emailadresse und/oder die Adresse handeln, oder auch um die Auftragsnummer, die Kundennummer oder ähnliche kundenspezifische Informationen. Die Identifikationskomponente ist vorzugsweise Teil der mindestens einen Teil-Postbox des Absenders oder mit dieser verknüpft, sodass eine Zuordnung des mindestens einen Empfängers in der jeweiligen Teil-Postbox erfolgen kann. Die Zuordnung des mindestens einen Empfängers kann beispielsweise initial durch das Versenden eines Zuordnungscodes über einen separaten Kanal, wie z.B. physische Post oder Telefon, erfolgen oder durch anderweitige Identifizierungsmechanismen, wie die Identifizierung des Empfängers mittels Video, persönlicher oder elektronischer Identifikation, beispielsweise mit der Postident^{®} (https://www.deutschepost.de/de/p/postident.html), der Video-ID^{®} (https://www.electronicid.eu/) oder Nect Ident^{®} (https://nect.com/de/).

Das Kommunikationssystem umfasst ferner mindestens eine Konfigurationskomponente, die Informationen vom mindestens einen Absender, Empfänger, den einzelnen Komponenten, wie der Teil-Postboxen bzw. Teil-Postbox-Proxys, und/oder komponentenübergreifende bzw. Personen- bzw. Entitäten-übergreifende Informationen, verwaltet. Zu den übergreifenden Informationen gehört insbesondere die Information, welche Teil-Postboxen ein Empfänger eingebunden hat ("Liste der Teil-Postboxen"). Jedoch kann es sich bei den übergreifenden Informationen auch um andere Informationen handeln, die ausgetauscht werden. Diese übergreifenden Informationen stehen vorzugsweise lediglich der Zusammenfassungskomponente zur Verfügung und werden, falls überhaupt, auf den Teil-Postbox-Servern verschlüsselt gespeichert, sodass die Betreiber der Teil-Postboxen, insbesondere die Absender, sie nicht auslesen können. In einer bevorzugten Ausführungsform wird bei der verschlüsselten Speicherung, wie bei der Zugangskomponente, auch auf ein "Single Sign-on", ein symmetrisches Kryptosystem und/oder auf asymmetrische Kryptosysteme bzw. Public-Private-Key-Kryptosysteme zurückgegriffen. Letztere werden in dieser Erfindung vorzugsweise derart umgesetzt, dass der Benutzer das zugehörige Passwort so selten wie möglich, z.B. nur beim Synchronisieren neuer Endgeräte, eingeben muss.

Die Teil-Postboxen des Absenders und/oder Empfängers werden vorzugsweise innerhalb einer Sortierungskomponente der Zusammenfassungskomponente zusammengefasst, wobei die Sortierungskomponente jeweils eine Liste von allen Teil-Postboxen des Absenders und/oder Empfängers erstellt und speichert. Damit die jeweiligen Teil-Postboxen einem Absender und/oder einem Empfänger zugeordnet werden können, wird bei dem ersten Anmeldevorgang des Empfängers und/oder Absenders auf bzw. mit einer entsprechenden Teil-Postbox, diese in die Sortierungskomponente, vorzugsweise in die Liste der Teil-Postboxen des Empfängers, hinzugefügt. Im Falle des Empfängers wird hierbei in einem Aspekt im Speicher des Empfängers im Kommunikationssystem, vorzugsweise im lokal zugewiesenen Speicher des Browsers ("localStorage") des jeweiligen Endgeräts des Empfängers, unter einer dem Kommunikationssystem vorgegebenen URL (Uniform Resource Locator)-Adresse, die Teil-Postbox-Liste des Empfängers hinterlegt. Diese URL-Adresse wird im vornhinein durch eine Erzeugungskomponente erstellt, die für alle Postboxen zur Verfügung steht und für diese hinterlegt ist. In einer besonders bevorzugten Ausführungsform ist die einzigartige URL-Adresse für alle Kommunikationskomponenten und Teil-Postboxen hinterlegt. Mithilfe einer Austauschkomponente werden in einem weiteren Aspekt der Erfindung Nachrichten und/oder Informationen zu den Empfängern und/oder Absendern sowie derer Teil-Postboxen zwischen diesen und dem localStorage der URL-Adresse ausgetauscht. Der Nachrichtenaustausch erfolgt vorzugsweise mittels "postMessage" mit einem iframe zu der im Vorhinein bekannten URL, wodurch eine ursprungsübergreifende Kommunikation zwischen Window-Objekten, zwischen einer Seite und einem Pop-up, das sie hervorgebracht hat, und/oder zwischen einer Seite und einem darin eingebetteten iframe, ermöglicht wird. Besonders vorteilhaft ist es, wenn die Information als konfliktfreie replizierte Datenstruktur, beispielsweise als "Observed-Remove Set", vorliegt. Hierbei handelt es sich um eine Datenstruktur, die gleichzeitig modifiziert werden kann und schließlich überall den gleichen Zustand erreicht, d.h. konsistent ist. Um einen unberechtigten Zugriff auf die hinterlegten Informationen zu verhindern, ist eine Authentifizierung des "postMessage"-Kommunikationspartners von Vorteil. Dies kann auf verschiedene Arten geschehen, vorzugsweise erfolgt jedoch ein Abgleich mit einer durch eine seriöse Instanz bereitgestellten Liste vertrauenswürdiger Teil-Postboxen und/oder die Verschlüsselung mithilfe kryptographischer Zertifikate mittels einer Sicherungskomponente. Bei den verwendeten Zertifikaten kann es sich um jedes bekannte Zertifikat handeln, das es ermöglicht schützenswerte Informationen sicher zu übertragen. Mögliche Zertifikate umfassen, sind jedoch nicht begrenzt auf die folgende Auflistung: Standards für asymmetrische Kryptographie ("Public-Key Cryptography Standards, PKCS), ISO/IEC 9594-8 (X.509), Public-Key-Infrastruktur (PKI), Secure/Multipurpose Internet Mail Extensions (S/MIME), OpenPGP, Java Cryptography Extension KeyStore (JCEKS), Java Keystore (JKS) und ähnliche Zertifikate sowie deren Abwandlungen und Formate.

In einer weiteren Ausführungsform der vorliegenden Erfindung sind die Teil-Postboxen des Absenders und/oder Empfängers derart gestaltet, dass diese unberechtigten Benutzern keinen Zugriff auf die Dokumente ermöglichen und/oder dass die Dokumente durch Verschlüsselung auch für Personen mit Zugriff auf den Speicher des Kommunikationssystems, wie insbesondere den Server, nicht einsehbar sind. Diese weitere Sicherungskomponente umfasst insbesondere die Sicherung von Dokumenten und Informationen, die sich in einem Speicherzustand befinden und nicht aktiv in Verwendung sind. Die bevorzugten Sicherungsmethoden umfassen hierbei die Verschlüsselung ("Encryption at Rest") und/oder die Tokenisierung ("Tokenization"), wobei vorzugsweise die Verschlüsselung ("Encryption at Rest") angewandt wird, bei der die Daten mithilfe eines Schlüssels gesichert werden. Mögliche Verschlüsselungsmethoden umfassen, sind jedoch nicht begrenzt auf die folgende Auflistung: Rivest-Shamir-Adleman (RSA), Data Encryption Standard (DES), Advanced Encryption Standard (AES), HC-256, ECC (Elliptic Curve Cryptography) und/oder andere Methoden. Der mindestens eine Schlüssel zur "Encryption at Rest" wird bevorzugt innerhalb einer jeden Teil-Postbox abgelegt. Um eine möglichst sichere Ablage für diesen zu erhalten, wird eine jede Teil-Postbox vorzugsweise in einen Dokumenten-Server und einen Schlüssel-Server untergliedert, wodurch jede Server-Komponente eine bestimmte getrennte Aufgabe übernehmen kann.

Die Erfindung dient vor allem der Bereitstellung von Dokumenten von einem oder mehreren Absendern an mindestens einen Empfänger. Daher betrifft die Erfindung auch ein Verfahren zur verbesserten Bereitstellung von Dokumenten an einen Empfänger.

Das Verfahren wird vorzugsweise mit einem zuvor beschriebenen Kommunikationssystem durchgeführt, welches mindestens zwei Teilkomponenten, in Form von einer Teil-Postbox auf Seiten des mindestens einen Absenders und einer Empfangskomponente auf der Seite des mindestens einen Empfängers, umfasst. Die Teil-Postbox auf Seiten des Absenders umfasst ferner mindestens einen Teil-Postbox-Server, welcher mit Empfangskomponenten unterschiedlicher Empfänger kommunizieren kann. Darüber hinaus können bei mehreren Teil-Postbox-Servern Dokumente und Informationen, die Dokumente betreffend, auf unterschiedlichen Servern hinterlegt sein. Die Empfangskomponenten der Empfänger sind vorzugsweise aus einer Zusammenfassungskomponente ausgebildet, die mehrere Teil-Postbox-Proxys umfassen kann. Der Teil-Postbox-Proxy sowie die Zusammenfassungskomponente werden vorzugsweise über eine Browser-Anwendung betrieben, sodass kein zusätzliches Programm oder App installiert werden müssen.

Bei der Kommunikation zwischen einem Absender und einem Empfänger kommuniziert die eine Teil-Postbox des Absenders mit jeweils einem Teil-Postbox-Proxy eines Empfängers. Soll eine Kommunikation zwischen einem Absender und mehreren Empfängern erfolgen, so weisen auch die weiteren Empfänger (Empfänger m) einen Teil-Postbox-Proxy auf, welcher das Gegenstück zu der Teil-Postbox des Absenders bildet, wie beispielsweise in Fig. 1 dargestellt.

Folglich umfasst das Verfahren die folgenden Schritte: (a) Bereitstellen mindestens eines Dokuments innerhalb einer Teileinheit, d.h. einer Teil-Postbox, vom Absender; (b) Übermittlung oder Abrufen des mindestens einen Dokuments aus der Teil-Postbox an die Empfänger bzw. durch die Empfänger, wobei der Empfang des Dokuments über ein Gegenstück zu der Teil-Postbox des Absenders, nämlich der Empfangskomponente (Teil-Postbox-Proxy) des jeweiligen Empfängers erfolgt; (c) Darstellen des mindestens einen Dokuments; (d) Auslesen und Sichten des mindestens einen Dokuments durch den Empfänger.

Die Bereitstellung des mindestens einen Dokuments kann auch für mehrere Empfänger bestimmt sein, wobei sodann jeder Empfänger mit seinem eigenen Teil-Postbox-Proxy auf das Dokument der Teil-Postbox des Absenders zugreifen kann.

Die Übermittlung des mindestens einen Dokuments aus der Teil-Postbox an den Empfänger kann aktiv erfolgen, jedoch erfolgt eine Übermittlung vorzugsweise erst, wenn der Empfänger das Dokument abruft. In einem solchen Fall kontrolliert der Empfänger den Empfang als auch die Übermittlung der für ihn hinterlegten Dokumente auf der Teil-Postbox bzw. dem mindestens einen Teil-Postbox-Server des Absenders. Die Übermittlung erfolgt daher "on demand". Der Begriff "Übermittlung" kann folglich auch den Prozess des Abrufens eines Dokuments durch den Empfänger umfassen. Der Abruf kann dabei nicht nur zur direkten Anzeige des Dokuments erfolgen, sondern z.B. auch, um es zur Weiterverarbeitung in ein anderes System des Empfängers zu exportieren.

Der Teil-Postbox-Proxy der Empfangskomponente des Empfängers wird vorzugsweise mithilfe eines Webbrowsers auf einem Endgerät des Empfängers ausgeführt, wie bereits zum Kommunikationssystem beschrieben. Es handelt sich bei dem Teil-Postbox-Proxy insbesondere um einen Übertragungspunkt, in dem Dokumente eines Absenders zusammenlaufen und an den Empfänger weitergegeben werden.

Falls mehrere Absender an einen Empfänger Dokumente übermitteln möchten, weist jeder Absender vorzugsweise jeweils eine Teilkomponente auf, die jeweils eine Teil-Postbox darstellt. Die jeweiligen Teil-Postboxen der Absender kommunizieren jeweils nur mit einer Teilkomponente des Empfängers, d.h. nur mit einem dazugehörigen Teil-Postbox-Proxy, der jeweils nur einer Teil-Postbox zugeordnet ist. Die Empfangskomponente weist bei einer solchen Ausführung insbesondere eine Zusammenfassungskomponente auf, in der die Teil-Postbox-Proxys verschiedener Absender umfasst sind. Die Zusammenfassungskomponente des Empfängers ermöglicht ihm eine Übersicht aller von ihm eingebundenen Teil-Postboxen, wie der Fig. 1 zu entnehmen ist. Wie auch die Teil-Postbox-Proxys wird die Zusammenfassungskomponente im Web-Browser auf einem Endgerät des einen Empfängers ausgeführt. Das Verfahren umfasst daher in einem weiteren Aspekt der Erfindung die Kommunikation von mehreren Absendern mit einem Empfänger, wobei die Dokumente der jeweiligen Absender in jeweils separaten Teil-Postboxen erstellt und gespeichert werden und von diesen sodann an einen Empfänger übermittelt bzw. abgerufen werden, wobei die Dokumente der jeweiligen Absender in getrennten Teil-Postbox-Proxys des Empfängers (Teilkomponenten) empfangen werden und vorzugsweise durch die Zusammenfassungskomponente gemeinsam angezeigt werden. Folglich ist der Empfänger in der Lage auf Dokumente mehrerer Absender mit einem Mal zuzugreifen, ohne diverse Benutzerkonten zu haben.

Die mindestens eine Teileinheit, d.h. die Teil-Postbox, des Absenders, wird vorzugsweise als Server-Anwendung ausgeführt. Aus verschiedenen Gründen, beispielsweise zum Erhöhen der Datensicherheit und/oder zur Lastverteilung, können beim Absender innerhalb der Teil-Postbox mehrere Teil-Postbox-Server umfasst sein, auf welchen unterschiedliche und/oder replizierte Dokumente und/oder Informationen der Teil-Postboxen vorliegen. Folglich umfasst das Verfahren in einem weiteren Aspekt die Bereitstellung ein oder mehrerer Dokumente aus ein oder mehreren Teil-Postbox-Servern einer Teil-Postbox eines Absenders. Die unterschiedlichen Teil-Postbox-Server können jedoch mit demselben Teil-Postbox-Proxy kommunizieren, der mit der Teil-Postbox des Absenders zusammenhängt.

In der Zusammenfassungskomponente des einen Empfängers werden vorzugsweise Dokumente aller eingepflegten Teil-Postboxen angezeigt, wobei vorzugsweise lediglich ein aktiver Teil-Postbox-Proxy im Detail dargestellt wird. Das Verfahren umfasst daher in einer weiteren Ausführungsform die Bestimmung bestimmter, vorzugsweise durch den Nutzer voreingestellter, Kriterien eines Teil-Postbox-Proxys, wobei insbesondere ein Teil-Postbox-Proxy als aktiv gekennzeichnet wird, wenn dieser das aktuell darzustellende Dokument enthält. Der aktive Teil-Postbox-Proxy wird sodann im Detail durch die Zusammenfassungskomponente dem Empfänger angezeigt, wobei die Informationen der anderen Teil-Postbox-Proxys, die mit anderen Absendern verknüpft sind, lediglich nur zusammengefasst dargestellt werden, beispielsweise die Anzahl der in dem Teil-Postbox-Proxy umfassten Dokumente. Jedoch kann in einer alternativen Ausführungsform die Darstellung der Dokumente der unterschiedlichen Teil-Postbox-Proxys auch durch den aktiven Teil-Postbox-Proxy erfolgen, ohne dass eine Zusammenfassungskomponente umfasst ist.

Wie bereits zuvor zum Kommunikationssystem beschrieben, erfolgt die Dokumentenübertragung vorzugsweise zwischen den mindestens zwei Geräten des Absenders und des Empfängers an mindestens zwei verschiedenen Orten kabelgebunden und/oder kabellos mit den zuvor zum Kommunikationssystem beschriebenen Verbindungen zum Informationsaustausch.

Das Verfahren zum Bereitstellen von Informationen kann in jedem Schritt und/oder zwischen den Schritten ferner geeignete Maßnahmen umfassen, die es ermöglichen die Dokumente und/oder die Übermittlung dieser, d.h. die Kommunikation zwischen dem mindestens einen Absender und dem mindestens einen Empfänger, zu sichern. Die Sicherung der Dokumente umfasst insbesondere die Verschlüsselung der Dokumente mit geeigneten Verschlüsselungsprotokollen sowie erweiterten Sicherheitsmaßnahmen, wie zum Kommunikationssystem ausgeführt. Folglich soll die Integrität der übertragenen Nachrichten sichergestellt werden.

Um einen unbefugten Zugang auf den Teil-Postbox-Proxy zu verhindert, umfasst das Verfahren ferner die Identifizierung des mindestens einen Empfängers beim Abrufen des Teil-Postbox-Proxys. Zur Identifizierung können grundsätzlich alle bekannten Authentifizierungssysteme verwendet werden, die es erlauben den Empfänger zu verifizieren, wie zuvor bei dem Kommunikationssystem beschrieben. Insbesondere werden Authentifizierungssysteme bevorzugt verwendet, die dem Empfänger eine einmalige Authentifizierung ermöglichen, die ihn lokal auf seinem Endgerät berechtigt, auf ein oder mehrere Teil-Postbox-Proxys zuzugreifen, ohne dass dieser sich mehrfach anmelden muss.

In einem weiteren Aspekt soll auch sichergestellt werden, dass der Empfänger des Dokuments auch der richtige Empfänger ist, den der Absender gemeint hat. Hierfür erfolgt vorzugsweise ein Abgleich von Informationen des Absenders zum Empfänger mit der Identität des Empfängers. Bei den Informationen kann es sich beispielsweise, um persönliche Informationen, wie das Geburtsdatum, Namen, Emailadresse und/oder die Postanschrift handeln, oder auch um die Auftragsnummer, die Kundennummer oder ähnliche kundenspezifische Informationen, handeln, jedoch nicht begrenzt auf die vorangegangene Auflistung. Der Abgleich der Informationen von Absender und Empfänger erfolgt vorzugsweise vor der Übermittlung an den Empfänger innerhalb der Teil-Postbox des Absenders.

In einer bevorzugten Ausführungsform umfasst das Verfahren ferner die Verwaltung der Kommunikation zwischen dem mindestens einen Absender und mindestens einem Empfänger. Der Schritt des Verwaltens erfolgt neben der eigentlichen Kommunikation, wobei insbesondere bei einer Einbindung einer neuen Teil-Postbox eines Absenders durch einen Empfänger übergreifende Informationen, wie die Information, welche Teil-Postboxen ein Empfänger eingebunden hat ("Liste von Teil-Postboxen"), verwaltet werden. Diese übergreifenden Informationen werden in den Teil-Postboxen der Absender und/oder der Zusammenfassungskomponente des Empfängers hinterlegt, wobei diese bei den Absendern vorzugsweise verschlüsselt gespeichert werden, sodass die Betreiber der Teil-Postboxen, insbesondere die Absender, sie nicht auslesen können. Das Verwalten umfasst auf Empfängerseite insbesondere die Speicherung im Speicher des Endgeräts des Empfängers, vorzugsweise im lokal zugewiesenen Speicher des Browsers ("localStorage") des jeweiligen Endgeräts des Empfängers, mit Bezug zu einer vorgegebenen URL (Uniform Resource Locator)-Adresse. Um auch hier einen unberechtigten Zugriff auf die hinterlegten Informationen zu verhindern, ist eine Authentifizierung mittels bekannter Verfahren von Vorteil. Diese Authentifizierung erfolgt vorzugsweise über einen Abgleich mit einer von einer seriösen Stelle bereitgestellten Liste vertrauenswürdiger Teil-Postboxen und/oder die Authentifizierung und/oder Integritätsprüfung mithilfe kryptographischer Zertifikate.

Die Erfindung betrifft darüber hinaus auch ein Computerprogrammprodukt, das in den internen Speicher eines digitalen Computers geladen werden kann und Softwarecodeabschnitte umfasst, mit denen Teile des zuvor beschriebenen Verfahrens ausgeführt werden, wenn das Computerprogrammprodukt auf einem Computer läuft. In einem Aspekt der vorliegenden Erfindung können mehrere Computerprogrammprodukte auf einem oder mehreren verschiedenen Computern und/oder Orten laufen und unterschiedliche Schritte des zuvor beschriebenen Verfahrens ausführen. Ein Computerprogrammprodukt kann ein Verfahren zur Bereitstellung von Dokumenten von einem oder mehreren Absendern an mindestens einen Empfänger ausführen, wobei dieses mindestens einen der folgenden Schritte umfasst:
a) Bereitstellen mindestens eines Dokuments innerhalb einer Teil-Postbox, vom Absender;
b) Übermitteln des mindestens einen Dokuments aus der Teil-Postbox an den mindestens einen Empfänger, wobei der Empfang des Dokuments über ein Gegenstück zu der Teil-Postbox des Absenders, nämlich eines Teil-Postbox-Proxy, der jeweiligen Empfänger erfolgt; und/oder
c) Darstellen des Dokuments für den Empfänger.

Ein weiteres Computerprogrammprodukt kann ein Verfahren umfassen, dass einen der folgenden Schritte umfasst:
a) Abrufen des mindestens einen Dokuments aus einer Teil-Postbox durch den mindestens einen Empfänger, wobei der Empfang des Dokuments über ein Gegenstück zu der Teil-Postbox des Absenders, nämlich eines Teil-Postbox-Proxy, der jeweiligen Empfänger erfolgt; und/oder
b) Auslesen, Sichten und/oder Weiterverarbeiten des mindestens einen Dokuments durch den mindestens einen Empfänger.

Das oben beschriebene Computerprogrammprodukt kann mit unterschiedlich vielen Computerprogrammprodukten und/oder Browser-basierten Verfahren kombiniert werden, wobei ein jedes Computerprogrammprodukt mindestens einen Schritt eines zuvor beschriebenen Verfahrens ausführt.

Der Informationsaustausch zu Dokumenten, Dokumentendaten und/oder Dokumentenmetadaten beim Absender und Empfänger ist innerhalb der Verfahren der zuvor beschriebenen Computerprogrammprodukte derart isoliert, dass kein Absender Kenntnis von Dokumenten, Dokumentendaten und/oder Dokumentenmetadaten anderer Absender erhält.

Der Vorteil eines solchen Kommunikationssystems, eines entsprechenden Verfahrens und dem Computerprogrammprodukt ist, dass die Dokumente bis zum Abruf durch den Empfänger gesichert und verschlüsselt auf der mindestens einen Teileinheit des Absenders verbleiben. Darüber hinaus ist keine Installation zusätzlicher Software auf dem Endgerät des Empfängers notwendig und die Empfangskomponente mit den Teil-Postbox-Proxys ist ferner mit nur minimalem Aufwand einzurichten. Das Kommunikationssystem ermöglicht zusätzlich die Zuordnung absenderspezifischer Identitäten zu einem Empfänger mit elektronischen Identitäten des Empfängers, wie empfängerspezifische Kennungen. Mithilfe der Zusammenfassungskomponente, die Dokumente der verschiedenen Absender und Teil-Postboxen zusammenfasst, kann der Empfänger, vorzugsweise ohne erneute Identifizierung, zwischen den Dokumenten der unterschiedlichen Teil-Postboxen, insbesondere Teil-Postbox-Proxys wechseln, Dokumente sichten, auf Dokumente zugreifen und/oder Antworten an den jeweiligen Absender richten. Ein weiterer Vorteil ist, dass die jeweilige Teil-Postbox vom Absender konfiguriert werden kann und in ein eigenes Kunden-Portal integriert werden kann.

Weitere Literatur über bekannte Verfahren und Anwendungen die in Übereinstimmung mit der vorliegenden Erfindung verwendet werden können, sind für den Fachmann auf dem Gebiet der Kommunikation bekannt.

### Beispiele

### Beispiel: Kommunikation zwischen mehreren Absendern und Empfängern innerhalb einer bevorzugten Ausführungsform der vorliegenden Erfindung

Fig. 1 stellt eine bevorzugte Ausführung eines erfindungsgemäßen Kommunikationssystems dar, bei welchem mehrere Absender mit mehreren Empfängern kommunizieren können, ohne dass eine bestimmte Anwendung, ein bestimmtes Programm oder Ähnliches verwendet werden muss.

Hierfür weist jeder Absender eine Teileinheit auf, die aus einer Teil-Postbox besteht. Diese Teil-Postbox wird als Server-Anwendung ausgeführt und kann mehrere Teil-Postbox-Server umfassen, die beispielsweise unterschiedliche Daten und/oder Dokumente speichern.

Jeder Empfänger weist auch seine eigene Empfangskomponente auf, welche vorzugsweise über einen Web-Browser, d.h. eine Web-Anwendung zugänglich ist. Diese Empfangskomponente umfasst ferner ein oder mehrere Teil-Postbox-Proxys, die Teilkomponenten des Empfängers, die jeweils einer Teil-Postbox eines Absenders zugeordnet sind und ihr Gegenstück bilden. Folglich erfolgt die Kommunikation zwischen einem Absender A und einem Empfänger X immer über die Teil-Postbox des Absenders A und dem Teil-Postbox-Proxy X.A des Empfängers. Eine Kommunikation zwischen dem Absender B hingegen erfolgt mit dem Empfänger X über den Teil-Postbox-Proxy X.B. Eine Ausnahme besteht nur, wenn mehrere Absender über eine Teil-Postbox kommunizieren oder ein Absender mehrere Teil-Postboxen nutzt.

Abhängig davon wie viele verknüpfte Teil-Postboxen der Empfänger mit unterschiedlichen Absendern n hat, weist seine Empfangskomponente auch eine entsprechende Anzahl an Teil-Postbox-Proxys auf. Um diese verschiedenen Teil-Postbox-Proxys auf Seiten des Empfängers besser verwalten zu können, ist eine Zusammenfassungskomponente vorgesehen, die alle Teil-Postbox-Proxys zusammenfasst und darstellt, sodass der Empfänger alle Dokumente der Absender im Blick hat.

Neben der direkten Kommunikation zwischen dem mindestens einen Absender und mindestens einen Empfänger kann ferner vorgesehen sein, dass die Kommunikation über Authentifizierungssysteme/Identitätsdienste geprüft und/oder gesichert wird. Hierbei kann neben einer Verschlüsselung der Dokumente auch eine Identifizierung des Empfängers oder auch ein Abgleich von Informationen des Empfängers beim Absender erfolgen.

## Patentansprüche

1. Kommunikationssystem zur Bereitstellung von Dokumenten von einem oder mehreren Absendern an mindestens einen Empfänger, wobei das Kommunikationssystem mindestens eine Teileinheit auf der Seite des mindestens einen Absenders und eine Empfangskomponente auf Seiten des Empfängers aufweist, wobei die Empfangskomponente für jede Teileinheit mindestens eines Absenders jeweils eine Teilkomponente auf Seiten des Empfängers aufweist und wobei
a) die mindestens eine Teileinheit des Absenders eine Teil-Postbox darstellt, die als Server-Anwendung auf einem oder mehreren Rechensystemen betrieben wird; und
b) die mindestens eine Teilkomponente des Empfängers einen Teil-Postbox-Proxy umfasst, welcher mithilfe eines Webbrowsers auf mindestens einem Endgerät eines Empfängers ausgeführt wird, wobei ferner die mindestens eine Teilkomponente des Empfängers Teil einer Zusammenfassungskomponente ist, die dem Empfänger eine Übersicht aller von ihm eingebundenen Teil-Postboxen mindestens eines Absenders ermöglicht;
wobei die Empfangskomponenten untereinander und die Empfangskomponenten zur Zusammenfassungskomponente im Informationsaustausch mindestens in Bezug auf Dokumente, Dokumentendaten und/oder Dokumentenmetadaten isoliert sind.

2. Kommunikationssystem nach Anspruch 1, wobei das Kommunikationssystem für mehrere Absender eine Teileinheit aufweist oder für einen Absender mehrere Teileinheiten umfasst sind.

3. Kommunikationssystem nach Anspruch 1 oder 2, wobei das Kommunikationssystem
a) mindestens eine Kommunikationskomponente umfasst, die eine Dokumentenübertragung aufweist, mit welcher eine Internetverbindung aufgebaut und/oder genutzt werden kann;
b) mindestens eine Sicherheitskomponente umfasst, die eine Verschlüsselung der zu übermittelnden Dokumente ermöglicht;
c) mindestens eine Zugangskomponente umfasst, die einen Zugang auf die Empfangskomponente mittels Identifizierung des jeweiligen Empfängers ermöglicht, wobei vorzugsweise für jede Teilkomponente des Empfängers eine Identifizierung des jeweiligen Empfängers notwendig ist;
d) mindestens eine Identifikationskomponente umfasst, die die Identität des Empfängers eines Dokuments mit der vom Absender hinterlegten Identität des Empfängers abgleicht, zuordnet und/oder überprüft;
e) mindestens eine Konfigurationskomponente umfasst, die Informationen vom mindestens einen Absender, Empfänger und/oder den einzelnen Komponenten verwaltet und speichert, wobei die gespeicherten Informationen vorzugsweise verschlüsselt sind und besonders bevorzugt lediglich der Empfangskomponente zur Verfügung stehen;
f) Teileinheiten des Absenders und/oder Teilkomponenten des Empfängers innerhalb einer Sortierungskomponente zusammenfasst, wobei die Sortierungskomponente jeweils eine Liste von allen Teileinheiten des Absenders und/oder Teilkomponenten des Empfängers umfasst und vorzugsweise beim ersten Anmeldevorgang des Empfängers und/oder Absenders auf oder mit einer entsprechenden Teileinheit bzw. Teilkomponente, diese in die Sortierungskomponente, hinzufügt; und/oder
g) eine Austauschkomponente umfasst, durch welche Nachrichten und/oder Informationen zu den Empfängern und/oder Absendern sowie derer Teileinheiten zwischen diesen und einer durch eine Erzeugungskomponente generierte URL-Adresse ausgetauscht werden, wobei die Informationsübertragung vorzugsweise verschlüsselt erfolgt.

4. Verfahren zur Bereitstellung von Dokumenten von einem oder mehreren Absendern an mindestens einen Empfänger, vorzugsweise mit einem Kommunikationssystem nach einem der Ansprüche 1 bis 3, umfassend die folgenden Schritte:
a) Bereitstellen mindestens eines Dokuments innerhalb einer Teil-Postbox, vom Absender;
b) Übermitteln oder Abrufen des mindestens einen Dokuments aus der Teil-Postbox an oder durch den mindestens einen Empfänger, wobei der Empfang des Dokuments über ein Gegenstück zu der Teil-Postbox des Absenders, nämlich eines Teil-Postbox-Proxy, der jeweiligen Empfänger erfolgt;
c) Darstellen der Dokumente für den Empfänger; und
d) Auslesen, Sichten und/oder Weiterverarbeiten des mindestens einen Dokuments durch den mindestens einen Empfänger;
wobei der Informationsaustausch zu Dokumenten, Dokumentendaten und/oder Dokumentenmetadaten beim Absender und Empfänger derart isoliert ist, dass kein Absender Kenntnis von Dokumenten, Dokumentendaten und/oder Dokumentenmetadaten anderer Absender erhält.

5. Verfahren nach Anspruch 4, wobei der Teil-Postbox-Proxy des Empfängers mithilfe eines Webbrowsers auf mindestens einem Endgerät des Empfängers ausgeführt wird.

6. Verfahren nach Anspruch 4 oder 5, wobei das Verfahren die Kommunikation von mehreren Absendern mit einem Empfänger umfasst, wobei die Dokumente der jeweiligen Absender in jeweils vorzugsweise separaten Teil-Postboxen erstellt und gespeichert werden und von diesen sodann an einen Empfänger übermittelt werden oder durch die Empfänger abgerufen werden, wobei die Dokumente der jeweiligen Absender aus den Teil-Postboxen in getrennten Teil-Postbox-Proxys des Empfängers empfangen werden und vorzugsweise durch eine Zusammenfassungskomponente gemeinsam angezeigt werden und/oder zugreifbar sind.

7. Verfahren nach einem der Ansprüche 4 bis 6, wobei die mindestens eine Teileinheit, vorzugsweise Teil-Postbox, des Absenders, als Server-Anwendung ausgeführt wird.

8. Verfahren nach einem der Ansprüche 4 bis 7, wobei das Verfahren die Bereitstellung ein oder mehrerer Dokumente aus ein oder mehreren Teil-Postbox-Servern einer Teil-Postbox eines oder mehrerer Absender umfasst, wobei die unterschiedlichen Teil-Postbox-Server je mit dem Teil-Postbox-Proxy kommunizieren, der mit der Teil-Postbox des Absenders zusammenhängt.

9. Verfahren nach einem der Ansprüche 4 bis 8, wobei das Verfahren
a) die Kennzeichnung eines Teil-Postbox-Proxys als aktiv umfasst, wobei vorzugsweise der aktive Teil-Postbox-Proxy im Detail durch die Zusammenfassungskomponente dem Empfänger angezeigt wird, wobei die Informationen der anderen Teil-Postbox-Proxys, die mit anderen Absendern verknüpft sind, lediglich zusammengefasst dargestellt werden;
b) zum Bereitstellen von Informationen in jedem Schritt und/oder zwischen den Schritten geeignete Sicherheitsmaßnahmen umfasst, die es ermöglichen die Dokumente und/oder die Übermittlung dieser zu sichern;
c) die Identifizierung des mindestens einen Empfängers beim Abrufen des Teil-Postbox-Proxys umfasst;
d) einen Abgleich von Informationen des Absenders zum Empfänger mit der Identität des Empfängers umfasst, wobei der Abgleich vorzugsweise vor der Übermittlung an den Empfänger innerhalb der Teil-Postbox des Absenders erfolgt; und/oder
e) eine Verwaltung der Kommunikation zwischen dem mindestens einen Absender und dem mindestens einen Empfänger umfasst, wobei insbesondere bei einer Einbindung einer neuen Teil-Postbox eines Absenders durch einen Empfänger übergreifende Informationen verteilt gespeichert und verwaltet werden, wobei vorzugsweise die Informationen verschlüsselt werden.

10. Computerprogrammprodukt, das in den internen Speicher eines digitalen Computers geladen werden kann und Softwarecodeabschnitte umfasst, mit denen Teile des Verfahrens nach einem der Ansprüche 4 bis 9 ausgeführt werden, wenn das Computerprogrammprodukt auf einem Computer läuft, wobei vorzugsweise ein Verfahren zur Bereitstellung von Dokumenten von einem oder mehreren Absendern an mindestens einen Empfänger ausgeführt wird, wobei dieses mindestens einen der folgenden Schritte umfasst:
a) Bereitstellen mindestens eines Dokuments innerhalb einer Teil-Postbox, vom Absender;
b) Übermitteln des mindestens einen Dokuments aus der Teil-Postbox an den mindestens einen Empfänger, wobei der Empfang des Dokuments über ein Gegenstück zu der Teil-Postbox des Absenders, nämlich eines Teil-Postbox-Proxy, der jeweiligen Empfänger erfolgt; und/oder
c) Darstellen des Dokuments für den Empfänger;
oder die folgenden Schritte umfasst:
d) Abrufen des mindestens einen Dokuments aus einer Teil-Postbox durch den mindestens einen Empfänger, wobei der Empfang des Dokuments über ein Gegenstück zu der Teil-Postbox des Absenders, nämlich eines Teil-Postbox-Proxy, der jeweiligen Empfänger erfolgt; und/oder
e) Auslesen, Sichten und/oder Weiterverarbeiten des mindestens einen Dokuments durch den mindestens einen Empfänger.
